# FASCICULE DE BREVET EUROPEEN

(11) **EP 2 527 250 B1**
(45) Date de publication et mention de la délivrance du brevet: **12.03.2014**
(21) Numéro de dépôt: 12003788.2
(22) Date de dépôt: 14.05.2012
(51) Int. Cl.: B64C 27/00

(54) **Procédé et aéronef muni d'un dispositif pour la réduction de vibrations**
Verfahren und Luftfahrzeug, das mit einer Vorrichtung zur Reduzierung der Schwingungen ausgestattet ist
Method and aircraft equipped with a device for reducing vibrations

(30) Priorité: 27.05.2011 FR 1101644
(43) Date de publication de la demande: 28.11.2012
(73) Titulaire: Airbus Helicopters, 13725 Marignane Cedex (FR); Ecole Nationale Supérieure d'Arts et Métiers ENSAM, 75013 Paris (FR)
(72) Inventeur: Krysinski, Tomasz, 13008 Marseille (FR); Malburet, François, 13111 Coudoux (FR)
(74) Mandataire: GPI & Associés

(56) Documents cités:
- EP-A1- 0 501 659
- US-A- 3 477 665
- US-A- 6 067 853
- TROCKMORTON ALEXANDER: "HELITECH 91. \REVIEW", AIRCRAFT ENGINEERING, BUNHILL PUBLICATIONS LTD. LONDON, GB, vol. 63, no. 11, 1 novembre 1991 (1991-11-01), pages 12-14, XP000236639,

## Description

La présente invention concerne un procédé et un aéronef muni d'un dispositif pour la réduction de vibrations, plus particulièrement un aéronef à voilure tournante.

L'invention se situe donc dans le domaine technique restreint des dispositifs pour réduire des vibrations d'aéronefs.

Parmi les aéronefs, on distingue notamment les aéronefs munis d'au moins une voilure tournante liée à une structure porteuse, cette structure porteuse étant dénommée usuellement « cellule » ou encore « fuselage ».

Un tel aéronef comprend de plus une installation motrice mettant en mouvement une boîte de transmission de puissance solidarisée à la structure porteuse de l'aéronef. La boîte de transmission de puissance inclut alors un mât entraînant en rotation la voilure tournante.

On note que la boîte de transmission de puissance est souvent reliée à la structure porteuse par une paroi de fond et des moyens de fixation annexes comprenant généralement trois ou quatre barres de suspension. La structure de montage de la voilure tournante comprenant la boîte de transmission de puissance et les barres de suspension est parfois dénommée « pylône » par l'homme du métier de part sa géométrie.

La voilure tournante et/ou la boîte de transmission peuvent être à l'origine de vibrations susceptibles de détériorer le confort des occupants de cette cabine en engendrant des mouvements vibratoires et du bruit dans cette cabine. De plus, des équipements de l'aéronef agencés dans la structure porteuse risquent d'être dégradés par les vibrations générées par l'ensemble comprenant la boîte de transmission de puissance et la voilure tournante.

Dès lors, on connaît différents dispositifs pour au moins réduire les vibrations ressenties en cabine afin d'améliorer le confort des occupants de cette cabine.

Selon une première solution, il est possible de prévoir des dispositifs passifs agissant à une fréquence prédéterminée. Bien que séduisante, cette solution présente des limites si les vibrations à réduire changent de fréquences.

Selon une deuxième solution, on peut utiliser des dispositifs actifs dans la cabine. Cette solution présente l'inconvénient d'agir uniquement sur les vibrations présentes en cabine.

Selon une troisième solution, on agence des dispositifs sous forme de pendules au niveau de la voilure tournante. Cette solution vise à agir à la source de vibrations mais présente l'inconvénient d'agir sur des pièces vitales de l'aéronef.

On peut se référer au livre « Origine et contrôle des vibrations mécaniques » publié aux éditions « Hermes science » par exemple.

Plus particulièrement, le document FR 2 731 405 suggère de fixer une boîte de transmission de puissance à une structure porteuse d'hélicoptère par des dispositifs de liaison élastiques commandés via un calculateur en fonction d'informations reçues par des capteurs agencés sur le fuselage, afin de minimiser une excitation dynamique exercée au centre de gravité du fuselage. Un tel dispositif de liaison élastique peut comprendre un cylindre délimitant deux chambres séparées par un piston. Ce piston comporte une tige reliée à la boîte de transmission de puissance, tandis qu'une barre solidaire du cylindre est reliée à la structure porteuse. De plus, les chambres du cylindre étant reliées par une canalisation, il est possible de commander le dispositif de liaison élastique en contrôlant la perte de charges générée par cette canalisation.

De même, le document EP 0501659 prévoit non pas des barres de suspension en tant que telles mais des actionneurs réalisés de manière unitaire avec des tirants mécanique pour relier une boîte de transmission de puissance et une structure porteuse.

Le document FR 1 506 385 mentionne l'utilisation de barres de suspension et d'une barre comprenant une liaison élastique associée à un vérin d'excitation.

Le document FR 2 770 825 propose d'agencer des résonateurs à double étage dans la cabine au niveau des sièges d'un aéronef pour au moins réduire les vibrations ressenties dans cette cabine, chaque résonateur à double étage étant commandé par une unité de commande mettant en oeuvre une pluralité d'opérations successives.

Chaque résonateur à double étage comprend un premier résonateur présentant une fréquence de résonance prédéterminée, et un deuxième résonateur associé au premier résonateur, le deuxième résonateur étant réglable en fréquence par un actionneur.

Cette architecture est notamment appliquée sur l'hélicoptère EC 725® MKII+.

Le document FR 2 566 862 présente un aéronef muni d'une installation motrice et d'une boîte de transmission de puissance disposées sur un plateau, des d'actionneurs étant disposés entre le plateau et le fuselage de l'aéronef.

Le document US 5 310 137 présente un système d'insonorisation muni de poutres d'une structure porteuse, ces poutres comprenant des actionneurs.

Le document EP 0 541 277 présente des actionneurs pour introduire des efforts dans une structure.

On connaît aussi le document TROCKMORTON ALEXANDER : « HELITECH 91\REVIEW », AIRCRAFT ENGINEERING, BUNHILL PUBLICATIONS LTD. LONDON, GB, vol 63, n° 11, 1 november 1991 pages 12-14.

La présente invention a alors pour objet de proposer un aéronef muni d'un système pour réduire dans une cabine les nuisances provoquées par une boîte de transmission de puissance et une voilure tournante.

Selon l'invention, un aéronef est muni d'une structure porteuse et d'une boîte de transmission de puissance pour entraîner en rotation une voilure tournante, la boîte de transmission de puissance étant fixée à la structure porteuse par au moins trois barres de suspension s'étendant chacune selon un axe d'extension.

Cet aéronef est notamment remarquable en ce qu'il comporte un système de réduction des vibrations muni d'un absorbeur de vibrations actif fixé autour de chaque barre de suspension, chaque absorbeur de vibrations étant pourvu d'une première masse reliée à la barre de suspension associée par un premier moyen élastique autorisant un déplacement de la premier masse le long de ladite barre de suspension ainsi que d'une deuxième masse reliée à la première masse par un deuxième moyen élastique autorisant un déplacement de la deuxième masse le long de ladite barre de suspension, la première masse et la deuxième masse entourant chacune ladite barre de suspension associée pour induire une absorption de vibrations selon un axe d'absorption confondu avec un axe d'extension de la barre de suspension, l'absorbeur de vibrations ayant un générateur d'efforts interposé entre la première masse et la deuxième masse introduisant un effort de commande sur ordre d'une unité de commande en fonction d'informations provenant au moins d'un premier capteur de mesure de paramètres de surveillance de la barre de suspension associée.

On note que la première masse et la deuxième masse sont parfois dénommées « masses sismiques ».

Par suite, l'aéronef comprend un absorbeur de vibrations de type résonateur à double étage fixé à chaque barre de suspension, un unique axe d'absorption de vibrations d'un absorbeur de vibrations étant confondu avec l'axe d'extension de la barre de suspension associée. Une unique unité de commande peut alors commander tous les générateurs d'efforts des absorbeurs de vibrations.

En effet, les vibrations engendrées par l'ensemble comprenant la voilure tournante et la boîte de transmission de puissance sont notamment transmises à la structure porteuse par les barres de suspension.

En agençant des absorbeurs de vibrations actifs à double étage sur chaque barre de suspension, on agit à proximité de la source d'émissions de nuisances pour maximiser l'efficacité du système de réduction des vibrations.

L'utilisation d'absorbeurs de vibrations actifs à double étage permet donc de réduire les vibrations dans des éléments situés en aval des barres de suspensions, à savoir des éléments fixés à la structure porteuse et notamment dans la cabine, ainsi que le bruit émis par les éléments vibrants.

En outre, chaque absorbeur de vibrations étant actif, il est possible de le régler en temps réel en fonction de nombreux facteurs pouvant modifier le niveau vibratoire dans la cabine notamment, de tels facteurs fluctuants pouvant inclure a vitesse de rotation de la voilure tournante ou la masse de l'aéronef en vol, cette masse diminuant notamment suite à la consommation de carburant par exemple.

Dès lors, le premier étage de l'absorbeur de vibrations représenté par la première masse reliée à une barre de suspension présente par exemple une fréquence de résonance prédéterminée, le deuxième étage de l'absorbeur de vibrations représenté par la deuxième masse reliée à la première masse présente une fréquence de résonance réglable à l'aide du générateur d'efforts. Globalement, l'absorbeur de vibrations émet des vibrations variables dans la barre de suspension associée pour contrecarrer les vibrations à traiter.

On se référera notamment au document FR 2 770 825 par exemple pour obtenir des informations sur un tel absorbeur de vibrations.

Selon un autre aspect, l'unité de commande borne éventuellement l'effort de commande d'un absorbeur de vibrations pour ne pas endommager la barre de suspension associée en fonction des informations provenant des premiers capteurs de mesure.

Par ailleurs, on note que chaque absorbeur de vibrations est fixé à une barre de suspension de manière à constituer un moyen externe à la suspension de la boîte de transmission de puissance, et ne constitue donc pas un organe agencé entre deux tirants mécaniques de cette suspension par exemple. Dès lors, la barre de suspension assure sa fonction de maintien en position de la boîte de transmission de puissance indépendamment du fonctionnement de l'absorbeur de vibrations associé, un blocage dudit absorbeur de vibrations étant alors peu impactant pour ladite barre de suspension.

De plus, l'énergie à fournir par le générateur d'efforts pour régler l'absorbeur de vibrations est minimisée.

Enfin, on note qu'un aéronef existant peut aisément être modifié pour être conforme à l'invention, le système de réduction des vibrations s'adaptant sur les barres de suspension existantes d'un tel aéronef existant.

Cet aéronef peut comporter une ou plusieurs des caractéristiques additionnelles suivantes.

Par exemple, le premier capteur de mesure d'une barre de suspension comporte indifféremment soit un capteur d'efforts transitant dans cette barre de suspension, soit un accéléromètre agencé à une extrémité de cette barre de suspension fixée à la structure porteuse.

Dès lors, à l'aide des premières informations provenant des premiers capteurs, l'unité de commande peut notamment éviter d'introduire dans la barre de suspension des efforts dépassant un seuil prédéterminé.

De plus, selon une première réalisation, l'unité de commande déduit à partir des premières informations un niveau vibratoire à traiter représentatif du niveau vibratoire présent en cabine.

Selon une deuxième réalisation, le système de réduction des vibrations comporte au moins un deuxième capteur de mesure agencé dans la structure porteuse et par exemple dans la cabine de l'aéronef, chaque deuxième capteur de mesure communiquant avec l'unité de commande, chaque deuxième capteur de mesure étant à choisir dans une liste incluant un capteur de bruit et un accéléromètre de manière non restrictive.

Par exemple, une unité d'analyse de l'unité de commande détermine les composantes sinusoïdales des vibrations à traiter à l'aide des valeurs mesurées par les premiers ou les deuxièmes capteurs de mesure selon la réalisation.

Une unité d'analyse de l'unité de commande détermine alors des caractéristiques du niveau vibratoire à traiter à partir desdites composantes sinusoïdales.

Indépendamment du mode de réalisation, une unité de calcul détermine les efforts à générer dans les barres de suspension à l'aide d'une matrice de transfert prédéterminée par le constructeur.

Par exemple, durant une phase d'identification, le constructeur dispose un absorbeur de vibrations sur une unique barre de suspension, puis mesure l'effet de cet absorbeur de vibrations lorsque la voilure tournante est entraînée en rotation en injectant une pluralité d'efforts distincts dans l'absorbeur à l'aide du générateur d'efforts. Le constructeur répète ces opérations sur chaque barre de suspension puis élabore une matrice de transfert à l'aide des données mesurées.

De plus, suite à l'élaboration des efforts à générer par l'unité de calcul, une unité de filtrage de l'unité de commande borne éventuellement lesdits efforts à générer pour ne pas dépasser un seuil prédéterminé relatif à la résistance d'une barre de suspension.

On comprend que l'unité de commande peut être un calculateur ou équivalent, l'unité d'analyse, l'unité de calcul et l'unité de filtrage étant par exemple des segments de code distincts d'un programme informatique ou encore des unités physiques munies d'équipements électroniques.

Selon un autre aspect, le générateur d'effort comporte par exemple au moins un actionneur électromagnétique.

De plus, un absorbeur de vibrations peut comporter un moyen de limitation du mouvement d'au moins une des masses sismiques, la première masse et/ou la deuxième masse, pour limiter les vibrations générées par cet absorbeur de vibrations par exemple.

Selon un variante préférée, la première masse comporte une masse supérieure et une masse inférieure reliées chacune par un ressort à la barre de suspension associée, la deuxième masse étant fixée à la masse supérieure par un organe supérieur élastique du deuxième moyen élastique et à la masse inférieure par un organe inférieur élastique du deuxième moyen élastique, le générateur d'efforts comprenant un actionneur électromagnétique supérieur entre la deuxième masse et la masse supérieure ainsi qu'un actionneur électromagnétique inférieur entre la deuxième masse et la masse inférieure.

Par ailleurs, au moins une desdites première et deuxième masses peut comprendre un moyen d'amortissement.

Il est à noter que chaque masse sismique présente un coefficient d'amortissement naturel résultant de forces de frottement. Toutefois, si nécessaire, il est concevable d'agencer un moyen d'amortissement entre la première masse d'un absorbeur de vibrations et la barre de suspension associée, et / ou entre la première masse et la deuxième masse d'un absorbeur de vibrations.

Par ailleurs, au moins un moyen élastique peut comprendre au moins un ressort en volute, le moyen élastique pouvant ainsi représenter un moyen de guidage.

Selon un autre aspect, l'aéronef comporte un capteur de vitesse de la vitesse de rotation de la voilure tournante, ce capteur de vitesse communiquant avec l'unité de commande.

Outre un aéronef, l'invention vise un procédé de minimisation des vibrations dans la cabine d'un tel aéronef, cet aéronef étant muni d'une structure porteuse et d'une boîte de transmission de puissance pour entraîner en rotation une voilure tournante, la boîte de transmission de puissance étant fixée à la structure porteuse par au moins trois barres de suspension.

Le procédé est notamment remarquable en ce que, l'aéronef ayant un système de réduction des vibrations muni d'un absorbeur de vibrations actif fixé à chaque barre de suspension, chaque absorbeur de vibrations étant pourvu d'une première masse et d'une deuxième masse entre lesquelles est agencé un générateur d'efforts, une unité de commande estime des efforts de commande pour minimiser un niveau vibratoire relatif au niveau vibratoire présent dans ladite cabine, puis l'unité de commande borne lesdits efforts de commande afin d'obtenir des efforts bornés en fonction des efforts courants transitant dans chaque barre de suspension afin que chaque effort courant ne dépasse pas un seuil prédéterminé, l'unité de commande envoyant un ordre aux générateurs d'efforts afin que ces générateurs d'efforts engendrent les efforts bornés déterminés.

Selon ce procédé, on agit sur les barres de suspension d'une boîte de transmission de puissance d'un aéronef, notamment un hélicoptère, pour réduire les vibrations en cabine. On utilise alors les barres de suspension de l'aéronef, et on borne l'effort de commande d'un absorbeur de vibrations actif à deux étages pour garantir un niveau d'efforts acceptable dans chaque barre de suspension.

Par exemple, un tel procédé peut inclure les étapes suivantes :
- on mesure des efforts courants transitant dans chaque barre de suspension,
- l'unité de commande détermine un niveau vibratoire relatif au niveau vibratoire présent dans la cabine, puis estime l'effort de commande à fournir par chaque générateur d'efforts de chaque absorbeur du système de réduction de vibrations pour minimiser ce niveau vibratoire, l'unité de commande bornant les efforts de commande estimés pour obtenir des efforts bornés en fonction des efforts courants afin que chaque effort courant ne dépasse pas un seuil prédéterminé,
- l'unité de commande envoie un ordre aux générateurs d'efforts afin que ces générateurs d'efforts engendrent lesdits efforts bornés,
- l'unité de commande réalise de manière itérative les opérations suivantes :
   o l'unité de commande détermine le niveau vibratoire effectif résultant du dernier ordre transmis aux générateurs d'efforts pour contrecarrer le dernier niveau vibratoire mesuré,
   o l'unité de commande détermine un niveau vibratoire courant puis une différence entre ce niveau vibratoire courant et ledit dernier niveau vibratoire,
   o l'unité de commande détermine de nouveaux efforts bornés à partir de ladite différence et des efforts courants exercés dans chaque barre de suspension, puis commande les générateurs d'efforts.

Selon une première réalisation, l'unité de commande détermine un niveau vibratoire relatif au niveau vibratoire présent dans ladite cabine en fonction des efforts courants exercés dans chaque barre de suspension, ou en fonction d'accélérations mesurées dans une extrémité de chaque barre de suspension reliée à la structure porteuse.

Selon une deuxième réalisation, l'unité de commande détermine un niveau vibratoire relatif au niveau vibratoire présent dans la cabine en fonction d'informations provenant d'au moins un capteur acoustique et/ou d'au moins un accéléromètre présents dans la cabine de l'aéronef.

Enfin, on peut mesurer la vitesse de rotation de la voilure tournante afin de synchroniser les efforts bornés engendrés par les générateurs d'efforts avec la fréquence de rotation de la voilure tournante pour maximiser l'efficacité du système.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention explicitant un mode de réalisation,
- la figure 2, un schéma explicitant un mode de réalisation alternatif, et
- la figure 3, une coupe d'un absorbeur de vibrations agencé sur une barre de suspension.

Les éléments présents dans plusieurs figures distinctes sont affectés d'une seule et même référence.

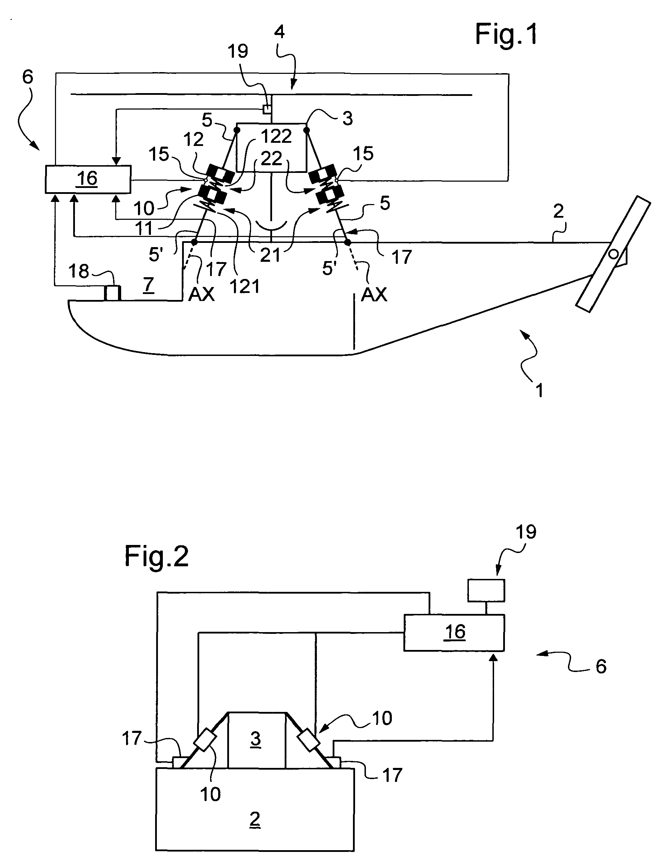

La figure 1 présente un aéronef 1 muni d'une structure porteuse 2 comprenant une cabine 7. De plus, l'aéronef 1 possède une boîte de transmission de puissance 3 engrenée par une installation motrice non représentée, la boîte de transmission de puissance 3 entraînant en rotation une voilure tournante 4 de l'aéronef 1.

Cette boîte de transmission de puissance 3 est fixée à la structure porteuse 2 notamment par l'intermédiaire d'une suspension comprenant au moins trois barres de suspension 5.

En fonctionnement, l'ensemble comprenant la boîte de transmission de puissance 3 et la voilure tournante 4 vibre, les vibrations étant transmises à la structure porteuse 2 par les moyens de liaison dudit ensemble à cette structure porteuse 2, notamment par les barres de suspension 5.

L'aéronef 1 comporte alors un système de réduction des vibrations 6 pour, par exemple, améliorer le confort des passagers de la cabine 7 en minimisant les vibrations et le bruit dans la cabine, voire pour éviter que des équipements de cette cabine soient détériorés par les vibrations dudit ensemble.

Ce système de réduction des vibrations 6 inclut un absorbeur de vibrations 10 actif à double étage par barre de suspension agencé autour de chaque barre de suspension. Chaque absorbeur de vibrations 10 génère des vibrations dans la barre associée selon un axe d'absorption AX confondu avec l'axe d'extension de la barre associée.

Selon la variante, les vibrations générées par le système de réduction des vibrations 6 visent à au moins réduire les vibrations ressenties dans la cabine, voire le bruit présent dans cette cabine :
- en minimisant les efforts transitant dans les barres de suspension ou en minimisant les accélérations de l'extrémité 5' de chaque barre de suspension reliée à la structure porteuse 2, l'excitation des barres de suspension engendrant notamment les vibrations ressenties dans la cabine, ou
- en minimisant les efforts dynamiques exercés au niveau du centre élastique de la structure porteuse, ce centre élastique pouvant éventuellement être excité par des efforts transitant dans les barres de suspension mais aussi par d'autres moyens de liaison de la boîte de transmission de puissance 3 à la structure porteuse 2 tels que le fond de ladite boîte de transmission de puissance,
- ou en minimisant les vibrations effectives mesurées dans ladite cabine.

Chaque absorbeur de vibrations 10 comprend alors une première masse 11 mobile représentant un premier étage, cette première masse 11 coulissant autour d'une barre de suspension 5 associée. En effet, la première masse 11 est reliée à la barre de suspension 5 par un premier moyen élastique 21. La première masse 11 est associée à un premier coefficient d'amortissement résultant du frottement de cette première masse 11 lors de son mouvement translatif le long de la barre de suspension ou d'un premier moyen d'amortissement dédié.

De plus, chaque absorbeur de vibrations 10 comprend une deuxième masse 12 mobile représentant un deuxième étage, cette deuxième masse 12 coulissant autour de la barre de suspension 5 associée. La deuxième masse 12 est reliée à la première masse 11 par un deuxième moyen élastique 22. La deuxième masse 12 est associée à un deuxième coefficient d'amortissement résultant du frottement de cette deuxième masse 12 lors de son mouvement translatif le long de la barre de suspension ou d'un deuxième moyen d'amortissement dédié.

Un générateur d'efforts 15 est alors agencé entre la première masse 11 et la deuxième masse 12, un générateur d'efforts 15 électromagnétique par exemple.

De plus, chaque absorbeur de vibrations 10 peut inclure un moyen de limitation du mouvement translatif d'au moins une desdites première masse 11 et deuxième masse 12, tel que des butées fixées sur la barre de suspension associée par exemple.

Selon la réalisation de la figure 1, la première masse 11 est fixée à un épaulement de la barre de suspension associée par un premier ressort 121, la deuxième masse 12 étant fixée à la première masse 11 par un deuxième ressort 122.

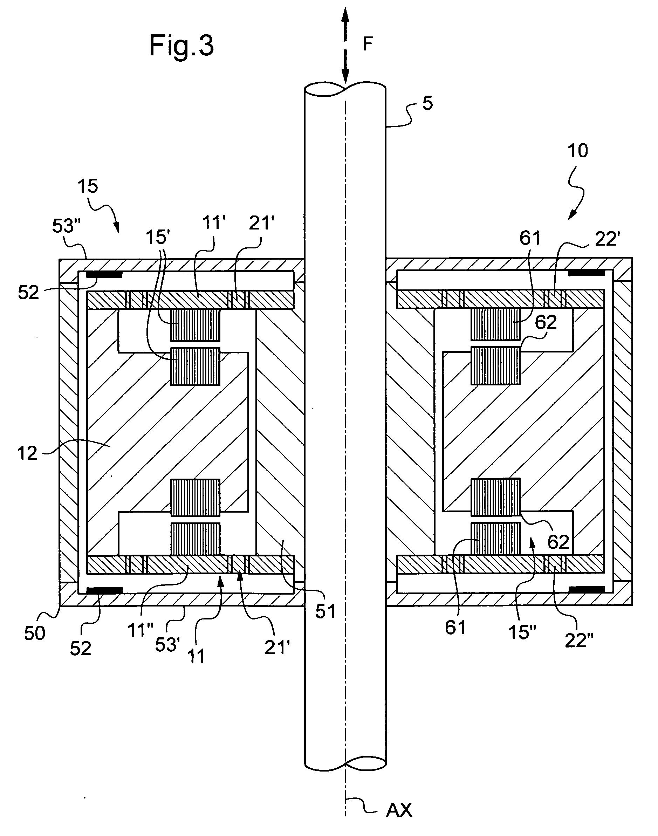

La figure 3 présente une réalisation préférée d'un absorbeur de vibrations 10 agencé sur une barre de suspension.

L'absorbeur de vibrations 10 comprend un carter 50 traversé par la barre de suspension 5, ce carter étant fixé à cette barre de suspension 5 par des moyens usuels.

La première masse 11 est alors fixée à une périphérie interne 51 du carter en contact avec la barre de suspension 5 par un premier moyen élastique. Plus précisément, la première masse 11 inclut une masse supérieure 11' et une masse inférieure 11" reliées chacune par un ressort en volute 21' à la barre de suspension 5 via la périphérie interne 51.

La deuxième masse 12 est alors fixée à la masse supérieure 11' par un organe supérieur élastique 22' du deuxième moyen élastique 22 de type ressort en volute par exemple, et à la masse inférieure 11" par un organe inférieur élastique 22" du deuxième moyen élastique 22 de type ressort en volute par exemple.

En outre, on note que le carter 50 comprend des moyens de limitation du mouvement des première et deuxième masses 11, 12, incluant une base inférieure 53' et une base supérieure 53" de ce carter par exemple. De plus, chaque base peut comporter des tampons 52.

Par ailleurs, le générateur d'efforts 15 est muni d'un actionneur électromagnétique supérieur 15' entre la deuxième masse 12 et la masse supérieure 11" ainsi qu'un actionneur électromagnétique inférieur 15" entre la deuxième masse 12 et la masse inférieure 11".

Chaque actionneur électromagnétique peut inclure une bobine 61 alimentée électriquement par une unité de commande et un moyen métallique 62.

En référence à la figure 1, le système de réduction des vibrations 6 comprend en effet au moins une unité de commande 16 pour commander les générateurs d'efforts 15, par exemple une unique unité de commande 16 commandant tous les générateurs d'efforts 15. Chaque unité de commande 16 agit sur au moins un générateur d'efforts 15 électromagnétique en déterminant les caractéristiques électriques du courant acheminé vers ce générateur d'efforts 15 éventuellement.

L'unité de commande 16 est alors reliée à au moins un premier capteur de mesure 17 de paramètres de surveillance de chaque barre de suspension. Le premier capteur de mesure 17 d'une barre de suspension 5 comporte indifféremment soit un capteur d'efforts transitant dans cette barre de suspension 5, soit un accéléromètre agencé à une extrémité 5' de cette barre de suspension fixée à la structure porteuse.

Indépendamment de la variante mise en oeuvre, une unité de commande fait appel aux premiers capteurs de mesure 17 pour ne pas transmettre un ordre vers les absorbeurs de vibrations 10 susceptible de donner naissance à des efforts transitant dans les barres de suspension 5 supérieurs à un seuil prédéterminé.

Ainsi, selon le procédé mis en oeuvre, une unité de commande 16 détermine un niveau vibratoire représentatif du niveau vibratoire présent dans la cabine 7, à l'aide d'informations provenant de capteurs prévus notamment à cet effet.

De plus, cette unité de commande 16 estime la valeur d'un effort de commande à transmettre aux générateurs d'efforts 15, sous la forme d'un courant électrique par exemple, pour minimiser ledit niveau vibratoire.

Des méthodes connues peuvent être utilisées.

Dès lors, l'unité de commande limite l'effort de commande si nécessaire pour obtenir un effort borné par générateur d'efforts 15, en fonction des efforts courants transitant dans chaque barre de suspension 5 afin que chaque effort courant ne dépasse pas un seuil prédéterminé.

L'unité de commande 16 envoie alors un ordre aux générateurs d'efforts 15 afin que ces générateurs d'efforts 15 engendrent les efforts bornés.

Par exemple, on mesure des efforts courants transitant dans chaque barre de suspension 5.

Dès lors, l'unité de commande 16 détermine un niveau vibratoire relatif au niveau vibratoire présent dans la cabine 7, puis estime l'effort de commande à fournir par les générateurs d'efforts 15 pour minimiser le niveau vibratoire avant de borner ces efforts de commande pour obtenir des efforts bornés si nécessaire. L'unité de commande peut alors faire appel à une matrice de transfert préétablie par le constructeur pour obtenir l'effort borné à fournir.

L'unité de commande 16 envoie alors un ordre aux générateurs d'efforts 15 afin que ces générateurs d'efforts 15 engendrent lesdits efforts bornés, puis réalise de manière itérative les opérations suivantes :
○ l'unité de commande 16 détermine le niveau vibratoire effectif résultant du dernier ordre transmis aux générateurs d'efforts 15 pour contrecarrer le dernier niveau vibratoire mesuré,
○ l'unité de commande 16 détermine un niveau vibratoire courant puis une différence entre ce niveau vibratoire courant et le dernier niveau vibratoire,
○ l'unité de commande 16 détermine de nouveaux efforts bornés à partir de ladite différence et des efforts courants exercés dans chaque barre de suspension 5 puis commande les générateurs d'efforts 15.

De plus, l'unité de commande 16 peut être reliée à un capteur de vitesse 19 de la vitesse de rotation NR de la voilure tournante 4. A l'aide du nombre de pales de cette voilure tournante 4, l'unité de commande 16 détermine la fréquence de rotation de cette voilure tournante. Une unité de commande 16 peut alors transmettre des ordres à des générateurs d'efforts ajustés en fonction de la vitesse de rotation NR de la voilure tournante, à une fréquence synchrone avec la fréquence de rotation de cette voilure tournante.

Ainsi, selon cette variante du procédé, on mesure la vitesse de rotation NR de la voilure tournante 4 afin de synchroniser l'effort de commande engendré par les générateurs d'efforts 15 avec la fréquence de rotation de ladite voilure tournante 4.

De plus selon la réalisation de la figure 1, l'unité de commande 16 détermine le niveau vibratoire relatif au niveau vibratoire présent dans la cabine 7 en fonction d'informations provenant d'au moins un capteur acoustique et/ou d'au moins un accéléromètre de la structure porteuse.

Par exemple, on peut mesurer directement les vibrations et le bruit à traiter à l'aide d'au moins un capteur acoustique et/ou d'au moins un accéléromètre de la structure porteuse présents dans la cabine 7 de l'aéronef 1.

De manière alternative, on peut par exemple quantifier les forces d'excitation au niveau de chaque fixation de la boîte de transmission et du fuselage, y compris au niveau des barres de suspension. On pilote alors les générateurs d'efforts de manière à minimiser le moment d'excitation au centre élastique de la structure porteuse.

Les premiers capteurs de mesure 17 sont alors utilisés pour limiter les efforts transitant dans les barres de suspension.

Selon la réalisation de la figure 2, l'unité de commande 16 détermine un niveau vibratoire relatif au niveau vibratoire présent dans la cabine 7 en fonction des informations provenant des premiers capteurs de mesure 17, et donc soit des efforts courants exercés dans chaque barre de suspension 5 soit d'accélérations mesurées dans une extrémité de chaque barre de suspension 5 reliée à la structure porteuse 2 selon la variante.

En effet, les informations relatives aux barres de suspension 5 permettent d'estimer le niveau vibratoire en cabine tout en surveillant que les efforts transitant dans les barres de suspension ne dépassent pas des seuils prédéterminés garantissant la sécurité du vol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'une structure porteuse (2) et d'une boîte de transmission de puissance (3) pour entraîner en rotation une voilure tournante (4), la boîte de transmission de puissance (3) étant fixée à ladite structure porteuse (2) par au moins trois barres de suspension (5),
**caractérisé en ce qu'**il comporte un système de réduction des vibrations (6) muni d'un absorbeur de vibrations (10) actif fixé autour de chaque barre de suspension (5), chaque absorbeur de vibrations (10) étant pourvu d'une première masse (11) reliée à la barre de suspension (5) associée par un premier moyen élastique (21) autorisant un déplacement de la premier masse (11) le long de ladite barre de suspension (5) ainsi que d'une deuxième masse (12) reliée à la première masse (11) par un deuxième moyen élastique (22) autorisant un déplacement de la deuxième masse (12) le long de ladite barre de suspension (5), la première masse (11) et la deuxième masse (12) entourant chacune ladite barre de suspension (5) associée pour induire une absorption de vibrations selon un axe d'absorption (AX) confondu avec l'axe d'extension de la barre de suspension (5), ledit absorbeur de vibrations (10) ayant un générateur d'efforts (15) interposé entre la première masse (11) et la deuxième masse (12) introduisant un effort de commande sur ordre d'une unité de commande (16) en fonction d'informations provenant au moins d'un premier capteur de mesure (17) de paramètres de surveillance de la barre de suspension associée.

2. Aéronef selon la revendication 1,
**caractérisé en ce que** ledit premier capteur de mesure (17) d'une barre de suspension (5) comporte indifféremment soit un capteur d'efforts transitant dans cette barre de suspension (5), soit un accéléromètre agencé à une extrémité (5') de cette barre de suspension fixée à la structure porteuse.

3. Aéronef selon l'une quelconque des revendications 1 à 2,
**caractérisé en ce que** ledit système de réduction des vibrations (6) comporte au moins un deuxième capteur de mesure (18) agencé dans une cabine (7) de l'aéronef et communiquant avec ladite unité de commande (16), chaque deuxième capteur de mesure (18) étant à choisir dans une liste incluant un capteur de bruit et un accéléromètre.

4. Aéronef selon l'une quelconque des revendications 1 à 3,
**caractérisé en ce que** ledit générateur d'efforts (15) comporte au moins un actionneur électromagnétique.

5. Aéronef selon l'une quelconque des revendications 1 à 4,
**caractérisé en ce que** ledit absorbeur de vibrations (10) comporte un moyen de limitation (23) du mouvement d'au moins une desdites première et deuxième masses (11, 12).

6. Aéronef selon l'une quelconque des revendications 1 à 5,
**caractérisé en ce que** ladite première masse (11) comporte une masse supérieure (11') et une masse inférieure (11") reliées chacune par un ressort (21') à la barre de suspension (5) associée, ladite deuxième masse (12) étant fixée à la masse supérieure (11') par un organe supérieur élastique (22') du deuxième moyen élastique (22) et à la masse inférieure (11") par un organe inférieur élastique (22") du deuxième moyen élastique (22), ledit générateur d'efforts (15) comprenant un actionneur électromagnétique supérieur (15') entre la deuxième masse (12) et la masse supérieure (11") ainsi qu'un actionneur électromagnétique inférieur (15") entre la deuxième masse (12) et la masse inférieure (11").

7. Aéronef selon l'une quelconque des revendications 1 à 6,
**caractérisé en ce que** au moins une desdites première et deuxième masses (11, 12) comprend un moyen d'amortissement.

8. Aéronef selon l'une quelconque des revendications 1 à 7,
**caractérisé en ce qu'**au moins un moyen élastique (21, 22) comprend au moins un ressort en volute.

9. Aéronef selon l'une quelconque des revendications 1 à 8,
**caractérisé en ce qu'**il comporte un capteur de vitesse (19) de la vitesse de rotation (NR) de la voilure tournante (4), ce capteur de vitesse (19) communiquant avec ladite unité de commande (16).

10. Procédé de minimisation des vibrations dans la cabine (7) d'un aéronef (1) selon l'une quelconque des revendications précédentes, ledit aéronef (1) étant muni d'une structure porteuse (2) et d'une boîte de transmission de puissance (3) pour entraîner en rotation une voilure tournante (4), la boîte de transmission de puissance (3) étant fixée à ladite structure porteuse (2) par au moins trois barres de suspension (5),
**caractérisé en ce que**, ledit aéronef (1) ayant un système de réduction des vibrations (6) muni d'un absorbeur de vibrations (10) actif fixé à chaque barre de suspension (5), chaque absorbeur de vibrations (10) étant pourvu d'une première masse (11) et d'une deuxième masse (12) entre lesquelles est agencé un générateur d'efforts (15), l'unité de commande (16) estime un effort de commande par générateur d'efforts (15) pour minimiser un niveau vibratoire relatif au niveau vibratoire présent dans ladite cabine (7), puis l'unité de commande (16) borne lesdits efforts de commande afin d'obtenir un effort borné par générateur d'efforts (15) en fonction des efforts courants transitant dans chaque barre de suspension (5) afin que chaque effort courant ne dépasse pas un seuil prédéterminé, ladite unité de commande (16) envoyant un ordre auxdits générateurs d'efforts (15) afin que ces générateurs d'efforts (15) engendrent lesdits efforts bornés.

11. Procédé selon la revendication 10,
**caractérise en ce que** :
- on mesure des efforts courants transitant dans chaque barre de suspension (5),
- l'unité de commande (16) détermine un niveau vibratoire relatif au niveau vibratoire présent dans ladite cabine (7), puis estime l'effort de commande à fournir par lesdits générateurs d'efforts (15) pour minimiser ledit niveau vibratoire, ladite unité de commande (16) bornant lesdits efforts de commande pour obtenir des efforts bornés en fonction des efforts courants afin que chaque effort courant ne dépasse pas un seuil prédéterminé,
- l'unité de commande (16) envoie un ordre auxdits générateurs d'efforts (15) afin que ces générateurs d'efforts (15) engendrent lesdits efforts bornés,
- l'unité de commande (16) réalise de manière itérative les opérations suivantes :
○ l'unité de commande (16) détermine le niveau vibratoire effectif résultant du dernier ordre transmis auxdits générateurs d'efforts (15) pour contrecarrer le dernier niveau vibratoire mesuré,
○ l'unité de commande (16) détermine un niveau vibratoire courant puis une différence entre ce niveau vibratoire courant et ledit dernier niveau vibratoire,
○ l'unité de commande (16) détermine de nouveaux efforts bornés à partir de ladite différence et des efforts courants exercés dans chaque barre de suspension (5), puis commande lesdits générateurs d'efforts (15).

12. Procédé selon la revendication 11,
**caractérisé en ce que** l'unité de commande (16) détermine un niveau vibratoire relatif au niveau vibratoire présent dans ladite cabine (7) en fonction des efforts courants exercés dans chaque barre de suspension (5).

13. Procédé selon la revendication 10,
**caractérisé en ce que** l'unité de commande (16) détermine un niveau vibratoire relatif au niveau vibratoire présent dans ladite cabine (7) en fonction d'accélérations mesurées dans une extrémité de chaque barre de suspension (5) reliée à la structure porteuse (2).

14. Procédé selon la revendication 10,
**caractérisé en ce que** l'unité de commande (16) détermine un niveau vibratoire relatif au niveau vibratoire présent dans ladite cabine (7) en fonction d'informations provenant d'au moins un capteur acoustique et/ou d'au moins un accéléromètre présents dans la cabine (7) de l'aéronef (1).

15. Procédé selon l'une quelconque des revendications 10 à 14,
**caractérisé en ce que** l'on mesure la vitesse de rotation (NR) de ladite voilure tournante (4) afin de synchroniser l'effort borné engendré par les générateurs d'efforts (15) avec la fréquence de rotation de ladite voilure tournante (4).

## Patentansprüche

1. Luftfahrzeug (1) mit einer Tragstruktur (2) und einem Kraftübertragungsgetriebe (3) für den Drehantrieb eines Drehflügels (4), wobei das Kraftübertragungsgetriebe (3) an der Tragstruktur (2) über mindestens drei Aufhängungsstangen (5) befestigt ist,
**dadurch gekennzeichnet, dass** es ein System (6) zur Reduzierung von Schwingungen aufweist, welches mit einem aktiven Schwingungsdämpfer (10) versehen ist, welcher um jede Aufhängungsstange (5) herum befestigt ist, wobei jeder Schwingungsdämpfer (10) mit einem ersten Körper (11) versehen ist, der mit der zugehörigen Aufhängungsstange (5) über ein erstes elastisches Mittel (21) verbunden ist, welches eine Bewegung des ersten Körpers (11) entlang der Aufhängungsstange (5) erlaubt, sowie mit einem zweiten Körper (12), der mit dem ersten Körper (11) über ein zweites elastisches Mittel (22) verbunden ist, welches eine Bewegung des zweiten Körpers (12) entlang der Aufhängungsstange (5) erlaubt, wobei der erste Körper (11) und der zweite Körper (12) jeweils die zugehörige Aufhängungsstange (5) umgeben, um eine Schwingungsdämpfung entlang einer Absorptionsachse (Ax), die mit der Längserstreckungsachse der Aufhängungsstange (5) zusammenfällt, zu induzieren, wobei der Schwingungsdämpfer (10) einen Kraftgenerator (15) aufweist, der zwischen dem ersten Körper (11) und dem zweiten Körper (12) angeordnet ist und der auf Befehl einer Steuereinheit (16) eine Steuerkraft einbringt in Abhängigkeit von Informationen, die von mindestens einem ersten Messsensor (17) für Überwachungsparametern der zugehörigen Aufhängungsstange stammen.

2. Luftfahrzeug nach Anspruch 1,
**dadurch gekennzeichnet, dass** der erste Messsensor (17) einer Aufhängungsstange (5) entweder einen Sensor zur Messung der durch diese Aufhängungsstange (5) gehenden Kräfte oder einen Beschleunigungsmesser aufweist, der an einem Ende (5') dieser Aufhängungsstange angeordnet ist, die an der Tragstruktur befestigt ist.

3. Luftfahrzeug nach einem der Ansprüche 1 bis 2,
**dadurch gekennzeichnet, dass** das System zur Schwingungsreduzierung (6) mindestens einen zweiten Messsensor (18) aufweist, der in einer Kabine (7) des Luftfahrzeugs angeordnet ist und mit der Steuereinheit (16) kommuniziert, wobei jeder zweite Messsensor (18) aus einer Liste auszusuchen ist, die einen Geräuschsensor und einen Beschleunigungsmesser umfasst.

4. Luftfahrzeug nach einem der Ansprüche 1 bis 3,
**dadurch gekennzeichnet, dass** der Kraftgenerator (15) mindestens einen elektromagnetischen Aktuator aufweist.

5. Luftfahrzeug nach einem der Ansprüche 1 bis 4,
**dadurch gekennzeichnet, dass** der Schwingungsdämpfer (10) ein Mittel (23) zur Begrenzung der Bewegung mindestens eines des ersten und des zweiten Körpers (11, 12) aufweist.

6. Luftfahrzeug nach einem der Ansprüche 1 bis 5,
**dadurch gekennzeichnet, dass** der erste Körper (11) einen oberen Körper (11') und einen unteren Körper (11") aufweist, die jeweils über eine Feder (21') mit der zugehörigen Aufhängungsstange (5) verbunden sind, wobei der zweite Körper (12) an dem oberen Körper (11') über ein oberes elastisches Organ (22') des zweiten elastischen Mittels (22) und an dem unteren Körper (11") über ein unteres elastisches Organ (22") des zweiten elastischen Mittels (22) befestigt ist, wobei der Kraftgenerator (15) einen oberen elektromagnetischen Aktuator (15') zwischen dem zweiten Körper (12) und dem oberen Körper (11") aufweist, sowie einen unteren elektromagnetischen Aktuator (15") zwischen dem zweiten Körper (12) und dem unteren Körper (11").

7. Luftfahrzeug nach einem der Ansprüche 1 bis 6,
**dadurch gekennzeichnet, dass** mindestens einer des ersten und des zweiten Körpers (11, 12) ein Dämpfungsmittel aufweist.

8. Luftfahrzeug nach einem der Ansprüche 1 bis 7,
**dadurch gekennzeichnet, dass** mindestens ein elastisches Mittel (21, 22) mindestens eine Schneckenfeder aufweist.

9. Luftfahrzeug nach einem der Ansprüche 1 bis 8,
**dadurch gekennzeichnet, dass** es einen Geschwindigkeitssensor (19) zur Messung der Rotationsgeschwindigkeit (NR) des Drehflügels (4) aufweist, wobei der Geschwindigkeitssensor (19) mit der Steuereinheit (16) kommuniziert.

10. Verfahren zur Minimierung von Schwingungen in der Kabine (7) eines Luftfahrzeugs (1) nach einem der vorstehenden Ansprüche, wobei das Luftfahrzeug (1) mit einer Tragstruktur (2) und einem Kraftübertragungsgetriebe (3) versehen ist für den Drehantrieb eines Drehflügels (4), wobei das Kraftübertragungsgetriebe (3) über mindestens drei Aufhängungsstangen (5) an der Tragstruktur (2) befestigt ist,
**dadurch gekennzeichnet, dass** das Luftfahrzeug (1) ein System zur Reduzierung von Schwingungen (6) auweist, welches mit einem aktiven Schwingungsdämpfer (10) versehen ist, der an jeder Aufhängungsstange (5) befestigt ist, wobei jeder Schwingungsdämpfer (10) mit einem ersten Körper (11) und einem zweiten Körper (12) versehen ist, zwischen denen ein Kraftgenerator (15) angeordnet ist, wobei die Steuereinheit (16) eine Steuerkraft des Kraftgenerators (5) abschätzt, um ein Schwingungsniveau relativ zum in der Kabine (7) herrschenden Schwingungsniveau zu minimieren, wobei die Steuereinheit (16) die Steuerkräfte begrenzt, um eine begrenzte Steuerkraft pro Kraftgenerator (15) in Abhängigkeit von in jeder Aufhängungsstange (5) durchlaufenden Kräften zu erhalten, damit jede durchlaufende Kraft einen vorbestimmten Schwellenwert nicht überschreitet, wobei die Steuereinheit (16) einen Befehl an die Kraftgeneratoren (15) schickt, damit diese Kraftgeneratoren (15) die begrenzten Kräfte erzeugen.

11. Verfahren nach Anspruch 10,
**dadurch gekennzeichnet, dass**
- die in jeder Aufhängungsstange (5) durchlaufenden Kräfte gemessen werden,
- die Steuereinheit (16) ein Schwingungsniveau relativ zum in der Kabine (7) herrschenden Schwingungsniveau bestimmt und die von den Kraftgeneratoren (15) zu liefernden Steuerkräfte zur Minimierung des Schwingungsniveaus abschätzt, wobei die Steuereinheit (16) die Steuerkräfte begrenzt, um begrenzte Kräfte in Abhängigkeit von den durchlaufenden Kräften zu erhalten, damit jede durchlaufende Kraft nicht einen vorbestimmten Schwellenwert überschreitet,
- die Steuereinheit (16) einen Befehl an die Kraftgeneratoren (15) sendet, damit diese Kraftgeneratoren (15) die begrenzten Kräfte erzeugen,
- die Steuereinheit (16) iterativ die folgenden Schritte ausführt:
○ die Steuereinheit (16) bestimmt das effektive Schwingungsniveau, welches sich aus dem letzten Befehl ergibt, der an die Kraftgeneratoren (15) gesendet wurde, um dem letzten gemessenen Schwingungsniveau entgegenzuwirken,
○ die Steuereinheit (16) bestimmt ein aktuelles Schwingungsniveau und eine Differenz zwischen diesem aktuellen Schwingungsniveau und dem letzten Schwingungsniveau,
○ die Steuereinheit (16) bestimmt erneut begrenzte Kräfte ausgehend von dieser Differenz und den in jeder der Aufhängungsstangen (5) ausgeübten aktuellen Kräften und steuert die Kraftgeneratoren (15).

12. Verfahren nach Anspruch 11,
**dadurch gekennzeichnet, dass** die Steuereinheit (16) ein Schwingungsniveau relativ zum in der Kabine (7) herrschenden Schwingungsniveau bestimmt in Abhängigkeit von in jeder der Aufhängungsstangen (5) ausgeübten aktuellen Kräften.

13. Verfahren nach Anspruch 10,
**dadurch gekennzeichnet, dass** die Steuereinheit (16) ein Schwingungsniveau relativ zu dem in der Kabine (7) herrschenden Schwingungsniveau bestimmt in Abhängigkeit von an einem Ende einer jeden Aufhängungsstange (5), die mit der Tragstruktur (2) verbunden ist, gemessenen Beschleunigungen.

14. Verfahren nach Anspruch 10,
**dadurch gekennzeichnet, dass** die Steuereinheit (16) ein Schwingungsniveau relativ zu dem in der Kabine (7) herrschenden Schwingungsniveau bestimmt in Abhängigkeit von Informationen, die von mindestens einem akustischen Sensor und/oder mindestens einem Beschleunigungsmesser, die in der Kabine (7) des Luftfahrzeugs (1) angeordnet sind, stammen.

15. Verfahren nach einem der Ansprüche 10 bis 14,
**dadurch gekennzeichnet, dass** die Drehgeschwindigkeit (NR) des Drehflügels (4) gemessen wird, um die von den Kraftgeneratoren (15) erzeugte begrenzte Kraft mit der Drehfrequenz des Drehflügels (4) zu synchronisieren.

## Claims

1. Aircraft (1) provided with a load-bearing structure (2) and with a main gearbox (3) for driving a rotary wing (4) in rotation, the main gearbox (3) being fastened to said load-bearing structure (2) via at least three suspension bars (5),
**characterised in that** it comprises a vibration reduction system (6) provided with an active vibration absorber (10) fastened around each suspension bar (5), each vibration absorber (10) being provided with a first mass (11) connected to the associated suspension bar (5) via a first flexible means (21) allowing the first mass (11) to move along said suspension bar (5), and with a second mass (12) connected to the first mass (11) via a second flexible means (22) allowing the second mass (12) to move along said suspension bar (5), the first mass (11) and the second mass (12) each surrounding said associated suspension bar (5) to induce vibration absorption along an absorption axis (AX) coinciding with the axis along which the suspension bar (5) extends, said vibration absorber (10) having a force generator (15) interposed between the first mass (11) and the second mass (12) introducing a control force on being instructed by a control unit (16) as a function of information coming from at least one first measurement sensor (17) for sensing monitoring parameters for monitoring the associated suspension bar.

2. Aircraft according to claim 1,
**characterised in that** said first measurement sensor (17) of a suspension bar (5) comprises either a force sensor for sensing forces passing through said suspension bar (5), or an accelerometer arranged at an end (5') of said suspension bar that is fastened to the load-bearing structure.

3. Aircraft according to any one of claims 1 to 2,
**characterised in that** said vibration reduction system (6) comprises at least one second measurement sensor (18) arranged in a cabin (7) of the aircraft and communicating with said control unit (16), each second measurement sensor (18) being chosen from a list including a noise sensor and an accelerometer.

4. Aircraft according to any one of claims 1 to 3,
**characterised in that** said force generator (15) comprises at least one electromagnetic actuator.

5. Aircraft according to any one of claims 1 to 4,
**characterised in that** said vibration absorber (10) comprises a movement-limiting means (23) for limiting the movement of at least one of said first and second masses (11, 12).

6. Aircraft according to any one of claims 1 to 5,
**characterised in that** said first mass (11) comprises an upper mass (11') and a lower mass (11"), each of which is connected via a spring (21') to the associated suspension bar (5), said second mass (12) being fastened to the upper mass (11') via an upper flexible member (22') of the second flexible means (22) and to the lower mass (11") via a lower flexible member (22') of the second flexible means (22), said force generator (15) comprising an upper electromagnetic actuator (15') between the second mass (12) and the upper mass (11"), and a lower electromagnetic actuator (15") between the second mass (12) and the lower mass (11").

7. Aircraft according to any one of claims 1 to 6,
**characterised in that** at least one of said first and second masses (12) comprises a damping means.

8. Aircraft according to any one of claims 1 to 7,
**characterised in that** at least one flexible means (21, 22) comprises at least one volute spring.

9. Aircraft according to any one of claims 1 to 8,
**characterised in that** it comprises a speed sensor (19) for sensing the rotational speed (NR) of the rotary wing (4), which speed sensor (19) communicates with said control unit (16).

10. Method of minimising vibrations in the cabin (7) of an aircraft (1) according to any one of the preceding claims, said aircraft (1) being provided with a load-bearing structure (2) and with a main gearbox (3) for driving a rotary wing (4) in rotation, the main gearbox (3) being fastened to said load-bearing structure (2) via at least three suspension bars (5),
**characterised in that**, with said aircraft (1) having a vibration reduction system (6) provided with an active vibration absorber (10) fastened to each suspension bar (5), each vibration absorber (10) being provided with a first mass (11) and with a second mass (12) between which a force generator (15) is arranged, the control unit (16) estimates a control force per force generator (15) for minimising a vibration level relative to the vibration level present in said cabin (7), and then the control unit (16) limits said control forces so as to obtain a limited force per force generator (15) as a function of the forces currently passing through each suspension bar (5) so that each current force does not exceed a predetermined threshold, said control unit (16) sending an instruction to said force generators (15) so that said force generators (15) generate said limited forces.

11. Method according to claim 10,
**characterised in that**:
- forces currently passing through each suspension bar (5) are measured;
- the control unit (16) determines a vibration level relative to the vibration level present in said cabin (7), and then estimates the control force to be delivered by said force generators (15) in order to minimise said vibration level, said control unit (16) limiting said control forces so as to obtain forces that are limited as a function of the current forces so that each current force does not exceed a predetermined threshold;
- the control unit (16) sends an instruction to said force generators (15) so that said force generators (15) generate said limited forces;
- the control unit (16) performs the following operations iteratively:
○ the control unit (16) determines the actual vibration level resulting from the last instruction transmitted to said force generators (15) for countering the last measured vibration level;
○ the control unit (16) determines a current vibration level and then determines a difference between said current vibration level and said last vibration level; and
○ the control unit (16) determines new limited forces on the basis of said difference and of the forces currently being exerted in each suspension bar (5), and then controls said force generators (15).

12. Method according to claim 11,
**characterised in that** the control unit (16) determines a vibration level relative to the vibration level present in said cabin (7) as a function of the forces currently being exerted in each suspension bar (5).

13. Method according to claim 10,
**characterised in that** the control unit (16) determines a vibration level relative to the vibration level present in said cabin (7) as a function of accelerations measured in an end of each suspension bar (5) that is connected to the load-bearing structure (2).

14. Method according to claim 10,
**characterised in that** the control unit (16) determines a vibration level relative to the vibration level present in said cabin (7) as a function of information coming from at least one acoustic sensor and/or from at least one accelerometer present in the cabin (7) of the aircraft (1).

15. Method according to any one of claims 10 to 14,
**characterised in that** the rotational speed (NR) of said rotary wing (4) is measured in order to synchronise the limited force generated by the force generators (15) with the rotational frequency of said rotary wing (4).
